Europäisches Patentamt

European Patent Office

Office européen des brevets

(19)

(11) Numéro de publication : **0 191 672**
**B1**

(12) **FASCICULE DE BREVET EUROPÉEN**

(45) Date de publication du fascicule du brevet :
17.05.89

(21) Numéro de dépôt : 86400119.3

(22) Date de dépôt : 21.01.86

(51) Int.· Cl.⁴ : **G 21 C 19/06**, G 21 C 17/00,
G 21 C 13/08

(54) Bassin, notamment piscine de désactivation de centrale nucléaire.

(30) Priorité : 21.01.85 FR 8500792

(43) Date de publication de la demande :
20.08.86 Bulletin 86/34

(45) Mention de la délivrance du brevet :
17.05.89 Bulletin 89/20

(84) Etats contractants désignés :
AT BE CH DE GB IT LI LU NL SE

(56) Documents cités :
BE—A— 828 908
DE—A— 2 312 098
DE—A— 3 125 211
FR—A— 1 590 183
FR—A— 2 383 289
US—A— 4 178 729

(73) Titulaire : ELECTRICITE DE FRANCE Service National
2, rue Louis Murat
F-75008 Paris (FR)

(72) Inventeur : Aubert, François
211 ancien chemin de Cassis
F-13009 Marseille (FR)
Inventeur : Dussart, Jean
12 boulevard Luce
F-13008 Marseille (FR)

(74) Mandataire : Moncheny, Michel et ai
c/o Cabinet Lavoix 2 Place d'Estienne d'Orves
F-75441 Paris Cedex 09 (FR)

Jouve, 18, rue St-Denis, 75001 Paris, France

## Description

La présente invention concerne les poutres destinées à supporter des éléments plans tels que des plaques ou des panneaux et susceptibles, notamment, de supporter les tôles du revêtement intérieur étanche d'une piscine de désactivation d'une centrale nucléaire.

Les piscines de centrale nucléaire, dites de désactivation sont destinées à stocker des substances irradiées après un séjour dans le réacteur et permettre ainsi la désactivation dans le temps de ces dernières au sein d'un volume important d'eau qui sert à absorber les rayonnements émis par lesdites substances afin que ceux-ci ne se propagent pas librement dans l'atmosphère.

Compte tenu des impératifs de sécurité, ces piscines doivent être parfaitement étanches afin d'éviter toute fuite d'eau contaminée. A cet effet, les piscines de désactivation comportent un revêtement intérieur étanche formé de tôles, par exemple, en acier inoxydable, jointes les unes aux autres, par leurs bords, à l'aide de cordons de soudure. Au niveau de ces derniers, les tôles sont fixées à une charpente formée de poutres incorporées dans la partie interne de la paroi correspondante de la piscine, généralement réalisée en béton, cette charpente supportant ainsi lesdites tôles du revêtement intérieur.

La distinction entre une partie externe et une partie interne pour chaque paroi résulte du mode de construction de celle-ci qui s'effectue en deux phases, la première phase consistant à réaliser ladite partie externe des parois.

A cet égard, de telles poutres comportent chacune une surface d'appui plate destinée à supporter les tôles et sont reliées à la partie externe de la paroi correspondante de la piscine par plusieurs pattes qui assurent leur fixation sur cette partie externe, préalablement à leur enrobage dans le béton de la partie interne correspondante. Ces pattes assurent non seulement la fixation de la poutre mais aussi le réglage de son espacement par rapport à la surface de la partie externe de la paroi respective pour en compenser les irrégularités.

On connaît ainsi un premier type de poutres comprenant une cornière ayant, en section transversale, à peu près la forme d'un L dont un flanc présente une surface d'appui pour les tôles et dont l'autre flanc coopère avec les pattes de fixation. Cependant, après remplissage de la partie interne des parois par du béton, il ne subsiste plus d'espace susceptible d'accueillir un dispositif permettant de radiographier les cordons de soudure pour en contrôler leur état.

De même, en cas de fuite au niveau desdits cordons de soudure, le liquide est amené à s'infiltrer de manière incontrôlable dans le béton dans la mesure où une telle structure ne prévoit pas de moyens pour drainer les éventuelles fuites.

Dans un deuxième type de poutres connues FR-A-2383 289, celles-ci comprennent chacune un profilé ayant, en section transversale, la forme d'un U sur le bord des ailes duquel est soudé un ruban plat en tôle qui forme avec ledit profilé en U, un canal à section transversale fermée et délimite une surface d'appui plate pour les tôles du revêtement intérieur d'une piscine.

Ce type de poutres apporte une amélioration en ménageant un canal pour la radiographie des soudures, qui n'est pas susceptible d'être obturé lors de la coulée du béton. Toutefois, aucune solution n'est apportée au problème lié au drainage des fuites éventuelles.

C'est ainsi que dans un troisième type de poutres, ces dernières présentent une structure analogue à celles du deuxième type précédemment décrit et sont munies sur leur surface d'appui d'ouvertures ponctuelles destinées à recueillir le liquide provenant de fuites au niveau des cordons de soudure. Il apparaît cependant que les ouvertures ponctuelles réalisées dans le ruban de tôle, ne permettent pas d'obtenir un drainage très efficace du liquide de fuite.

La présente invention a pour but de fournir un bassin dans lequel les poutres supportant les tôles délimitent chacune une surface d'appui plate pour les tôles du revêtement intérieur d'une piscine tout en ménageant un canal permettant l'introduction d'un appareil de radiographie après que la poutre ait été incorporée dans le béton et qui soit susceptible de permettre un drainage efficace des liquides de fuite provenant du cordon de soudure qui joint les tôles que cette poutre est destinée à supporter.

A cet effet, l'invention a pour objet un bassin, notamment une piscine de désactivation de centrale nucléaire, dont les parois sont munies d'un revêtement étanche de tôles soudées entre elles par leurs bords par l'intermédiaire de cordon de soudure et supportées sous chaque cordon de soudure par une poutre au niveau d'une surface d'appui de cette dernière, chaque poutre étant fixée dans une paroi correspondante du bassin et comportant un premier profilé ayant, en section transversale, à peu près la forme d'un U, une surface d'appui plane s'étendant longitudinalement en regard d'au moins une partie du fond du profilé caractérisé en ce que chaque poutre comprend un élément disposé à l'intérieur du premier profilé, cet élément délimitant ladite surface d'appui et au moins deux canaux longitudinaux dans le volume intérieur de la poutre, dont un canal à section transversale ouverte.

Suivant d'autres caractéristiques de l'invention :

— Le bord des ailes du profilé présente chacun un rebord s'étendant, parallèlement à la surface d'appui, vers l'extérieur de la poutre, ces rebords complétant la surface d'appui par leur surface orientée à l'extérieur de la poutre.

— La surface d'appui est espacée de chacune des ailes du profilé.

— Suivant un premier mode de réalisation, la poutre comprend un canal de visite, à section transversale fermée, et deux canaux de drainage longitudinaux, à section transversale ouverte.

— Les ailes du second profilé délimitent chacune un rebord de sorte que ce second profilé a, en section transversale, à peu près la forme d'un oméga.

— Suivant un deuxième mode de réalisation, la poutre comprend deux canaux longitudinaux, à section transversale ouverte, formant respectivement un canal de visite et de drainage et un canal de drainage.

— L'élément disposé à l'intérieur du profilé est un second profilé qui a, en section transversale, à peu près la forme d'un L dont un flanc est fixé perpendiculairement au fond du premier profilé et dont la surface de l'autre flanc, orientée en direction opposée audit fond forme ladite surface d'appui.

L'invention sera mieux comprise à la lecture de la description qui va suivre de deux modes de réalisation donnés uniquement à titre d'exemple, et faite en référence aux dessins annexés, sur lesquels :

— la Fig. 1 est une vue en coupe schématique partielle, en perspective et avec arrachement, d'une paroi d'une piscine de désactivation dont le revêtement intérieur étanche, en tôles est supporté par une charpente de poutres conformes à un premier mode de réalisation de l'invention ;

— la Fig. 2 est une vue schématique en coupe transversale d'un deuxième mode de réalisation d'une poutre conforme à l'invention, supportant deux tôles du revêtement intérieur étanche d'une piscine, soudées l'une à l'autre ;

— la Fig. 3 est une vue analogue à celle de la Fig. 2 illustrant une variante du deuxième mode de réalisation représenté sur cette même figure ; et

— la Fig. 4 est une vue schématique, en perspective, du-dessus d'une piscine de désactivation d'une centrale nucléaire illustrant partiellement un réseau de poutres conformes à l'invention, formant la charpente destinée à supporter les tôles de son revêtement intérieur étanche.

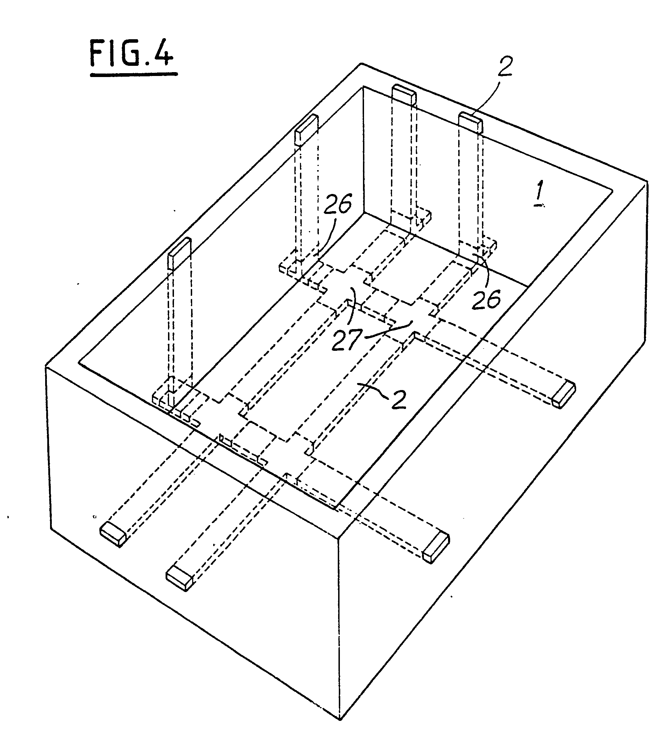

La piscine de désactivation de centrale nucléaire, représentée sur la Fig. 4 comprend un revêtement intérieur 1 étanche formé de tôles, par exemple, en acier inoxydable, supporté d'une manière qui sera décrite plus en détail dans la suite, par une charpente comportant un réseau quadrillé de poutres 2.

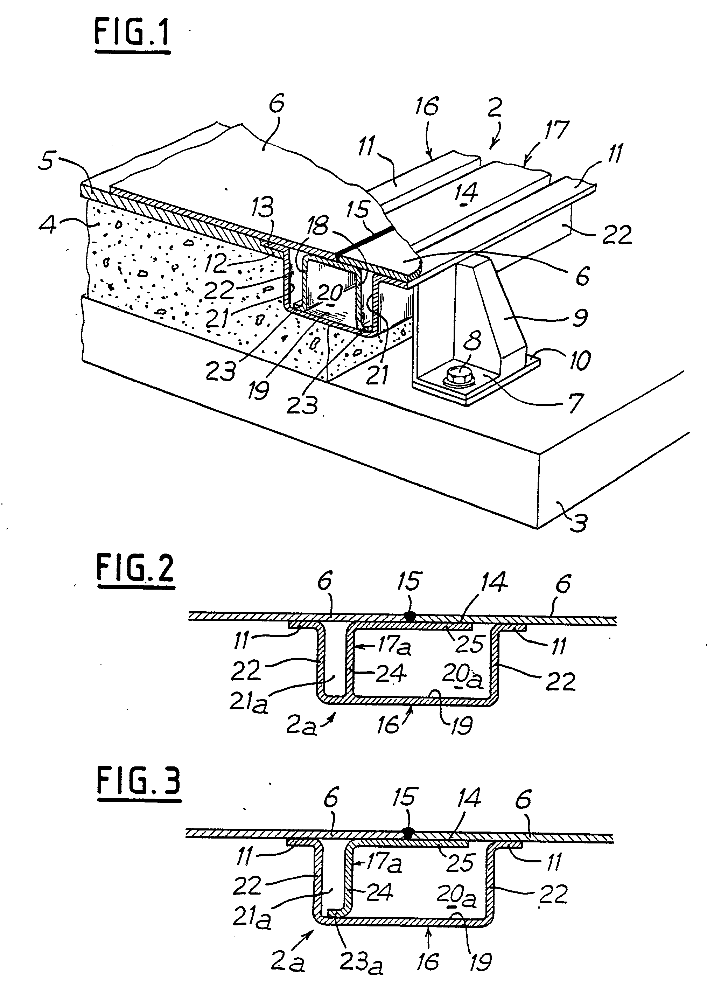

Les parois de cette piscine ont une structure analogue à celle illustrée schématiquement sur la Fig. 1. Sur cette figure, la paroi présente successivement de l'extérieur vers l'intérieur de la piscine, une partie externe 3 formée d'un matériau dur et dense tel que, par exemple, du béton et délimitant une surface intérieure à peu près plane, une partie interne 4 formée d'un matériau durcissable tel que, par exemple, du béton coulé dans un espace compris entre ladite partie externe 3 et un coffrage perdu comportant des plaques 5 par exemple, en fibrociment, disposées de manière jointive entre les poutres 2 afin de délimiter avec celles-ci une surface intérieure plane adaptée pour recevoir les tôles 6 du revêtement intérieur étanche de la piscine.

Les poutres 2 sont fixées chacune, avant coulage de la partie interne correspondante, sur la partie externe de la paroi au moyen de pattes de fixation 7 en L disposées de part et d'autre de la poutre, de préférence dans une disposition alternée, une de leur branche étant soudée à la poutre et l'autre étant fixée, par exemple, à l'aide d'un boulon 8 vissé dans ladite partie externe 3 de la paroi. Ces pattes permettent, en outre, de régler la distance des poutres par rapport à la partie externe de la paroi en compensant les irrégularités de sa surface intérieure brute.

Par ailleurs, il est prévu une cale 9, par exemple, en matière plastique rigide, au contact de chaque patte de fixation 7 sur laquelle elle est maintenue par l'intermédiaire d'un clinquant 10 qui s'étend sous la patte et la cale correspondante.

Ces cales 9 présentent chacune une face plane orientée vers l'intérieur de la piscine et coopèrent avec un rebord 11 longitudinal de la poutre voisine, s'étendant en regard et à distance desdites faces planes des cales 9 de telle façon qu'une partie périphérique 12 d'épaisseur réduite des plaques 5 puisse être insérée entre ces cales et ledit rebord 11 de la poutre 2 voisine.

La partie 12 d'épaisseur réduite des plaques 5 est délimitée par un épaulement 13 d'épaisseur correspondant à celle des rebords 11 et orienté vers l'intérieur de la piscine afin que les surfaces intérieures des plaques 5 et des poutres 3 soient contenues dans un même plan.

Les tôles 6 du revêtement intérieur étanche de la piscine reposent sur lesdites surfaces intérieures des plaques 5 du coffrage perdu et des poutres 2.

A cet égard, chaque poutre 2 délimite une surface d'appui 14 plane au niveau de laquelle, deux tôles 6 sont supportées et sont jointes l'une à l'autre par un de leurs bords, au moyen d'un cordon de soudure 15 qui s'étend longitudinalement sur la poutre 2 et à peu près au milieu de celle-ci, le cordon de soudure étant lui-même relié à la surface d'appui 14 de ladite poutre 2.

Conformément à un premier mode de réalisation de l'invention, la poutre 2 illustrée sur la Fig. 1, comprend un premier profilé 16 et un deuxième profilé 17 ayant respectivement chacun, en section transversale, à peu près la forme d'un U et, d'un oméga dont les ailes sont à peu près parallèles l'une de l'autre et de même longueur.

Le premier profilé 16 incorporé dans le béton de la partie interne de la paroi correspondante, forme la partie externe de la poutre sur laquelle les pattes 7 sont fixées et s'ouvre vers l'intérieur de la piscine.

Le deuxième profilé 17 sensiblement moins large que le premier, est fixé par le bord de chacune de ses ailes 18 au fond de ce dernier, ménageant ainsi trois canaux longitudinaux.

Un canal de visite 20 à section transversale fermée, adapté à recevoir un dispositif pour la radiographie des soudures des tôles 6, est formé entre les ailes 18 du deuxième profilé 17 et deux canaux de drainage 21, à section transversale ouverte vers l'intérieur de la piscine, sont formés de part et d'autre du canal de visite 20 entre lesdites ailes 18 du deuxième profilé 17 et les ailes 22 du premier 16.

En outre, le deuxième profilé 17 est fixé par soudage de deux rebords 23, prévus à l'extrémité de chacune de ses ailes 18 sur le fond 19 du premier profilé 16, lesdits rebords 23 s'étendant à l'extérieur du canal de visite 20.

De plus, la surface d'appui 14 des tôles 6 sur les poutres 2 est formée au niveau de chacun de celles-ci par la surface de la partie intermédiaire du deuxième profilé 17, orientée vers l'intérieur de la piscine, cette surface d'appui 14 étant contenue dans le même plan que la surface intérieure des rebords 11 prévus à l'extrémité de chacune des ailes 22 du premier profilé 16. Cette surface intérieure des rebords 11 complète ainsi avantageusement la surface d'appui 14, en supportant conjointement les tôles avec cette dernière.

En se référant à nouveau à la Fig. 4, on voit que l'on peut accéder aux poutres 2 verticales par le dessus de la piscine et que chacune de leur extrémité inférieure est raccordée à un alignement respectif de poutres 2, disposées horizontalement dans le fond de la piscine. Ce raccordement peut être assuré, comme représenté sur la Fig. 4, à l'aide d'un raccord creux en T 26 qui permet, d'une part, la communication des canaux de chaque poutre verticale avec ceux des poutres correspondantes, alignées horizontalement et, d'autre part, la communication des canaux de ces dernières avec une poutre qui s'étend en dehors de la piscine si cela est possible. Ce raccordement peut également être assuré par une poutre coudée, analogue en section transversale, à la poutre 2 décrite ci-dessus, courbée longitudinalement en arc de cercle de telle façon que ses extrémités délimitent entre elles, un angle droit. De plus, au niveau de chaque croisement de deux alignements de poutres 2, celles-ci sont raccordées au moyen d'un raccord creux en X 27 pour permettre ainsi la communication des canaux des poutres qui se croisent.

Cet agencement de la charpente qui supporte les tôles du revêtement 1 intérieur de la piscine, en un réseau de canaux accessible de l'extérieur par les bords supérieurs et éventuellement par le bas de cette dernière, permet l'introduction d'un dispositif de radiographie sur l'ensemble de la longueur des canaux de visite 20 et la canalisation du liquide de fuite, drainé par les poutres, sur l'ensemble du réseau.

En variante, la charpente de poutres peut, bien entendu, former plusieurs réseaux indépendants les uns des autres.

Une telle poutre 2, suivant l'invention permet d'une part, de radiographier l'ensemble de la soudure disposée sur sa surface d'appui à l'aide du canal de visite 20 longitudinal à section transversale fermée, apte à recevoir un dispositif approprié, et, d'autre part, d'assurer le drainage à 100 % des fuites au niveau de cette soudure par la présence d'un canal de drainage 21 longitudinal prévu de chaque côté de cette dernière.

Cette poutre assure, par ailleurs, parfaitement sa fonction de support pour les tôles 6 en ménageant une surface d'appui 14 plate sur laquelle ces dernières peuvent reposer en retransmettant au béton de la paroi correspondante, par l'intermédiaire de la poutre, les forces de pressions exercées par l'eau de la piscine et les forces de cisaillement dues aux contraintes thermiques.

En outre, la présence des rebords 11 du premier profilé 16 augmente avantageusement la surface de contact de la poutre avec les tôles en évitant, conjointement, le poinçonnement de ces dernières qui surviendrait si celles-ci étaient appliquées directement sur l'extrémité d'ailes droites.

Les parties du deuxième mode de réalisation de l'invention, représenté sur les Fig. 2 et 3, qui se distinguent de celles du premier, illustré sur la Fig. 1, vont être maintenant décrites, les parties analogues de ces deux modes de réalisation portant les mêmes références.

La poutre 2a représentée sur la Fig. 2 est obtenue directement par étirage à froid. Cette poutre 2a se distingue de celle précédemment décrite, en ce que le deuxième profilé 17 est substitué par un deuxième profilé 17a ayant, en section transversale, à peu près la forme d'un L venu de matière avec le premier profilé 16.

Un flanc 24 de ce deuxième profilé 17a est solidaire à une extrémité, du fond 19 du premier profilé 16 et s'étend en regard et à proximité d'une aile 22 de ce dernier pour délimiter avec celui-ci, un canal longitudinal de drainage 21a à section transversale ouverte en direction des tôles 6 du revêtement intérieur étanche d'une piscine de désactivation.

L'autre flanc 25 de ce profilé en L s'étend transversalement dans la direction opposée au canal de drainage 21a en ménageant un espace entre son extrémité libre et l'aile 22 correspondante du premier profilé 16, sa surface, orientée vers lesdites tôles 6 formant la surface d'appui 14 de ces dernières sur la poutre 2a.

Ainsi, un canal longitudinal de visite et de drainage 20a à section transversale ouverte, susceptible de recevoir un dispositif pour la radiographie de soudures, est formé entree l'aile 22 du premier profilé 16, opposée au canal de drainage 21a, et le flanc 24 du deuxième profilé 17a, fixé au premier.

En variante (Fig. 3), le deuxième profilé 17a réalisée séparément du premier, comporte un rebord 23a soudé sur le fond de ce dernier et s'étendant dans le canal de drainage 21a.

Mis à part l'intérêt que représente l'obtention directe d'une poutre par étirage à froid, cette poutre 2a est avantageusement moins large que la poutre 2 du premier mode de réalisation de l'invention pour une même largeur réservée au canal de visite respectif.

**Revendications**

1. Bassin, notamment piscine de désactivation de centrale nucléaire, dont les parois sont munies d'un revêtement (1) étanche de tôles (6) soudées entre elles par leurs bords par l'intermédiaire de cordons de soudure (15) et supportées sous chaque cordon de soudure par une poutre (2 ; 2a) au niveau d'une surface d'appui de cette dernière, chaque poutre étant fixée dans une paroi correspondante du bassin et comportant un premier profilé (16) ayant, en section transversale, à peu près la forme d'un U, une surface d'appui (14) plane s'étendant longitudinalement en regard d'au moins une partie du fond (19) du profilé caractérisé en ce que chaque poutre comprend un élément (17 ; 17a) disposé à l'intérieur du premier profilé, cet élément délimitant ladite surface d'appui (14) et au moins deux canaux (20, 21 ; 20a, 21a) longitudinaux dans le volume intérieur de la poutre dont un canal (21, 21a) à section transversale ouverte.

2. Bassin suivant la revendication 1, caractérisé en ce que le bord des ailes (22) du premier profilé (16) présente chacun un rebord (11) s'étendant, parallèlement à la surface d'appui (14), vers l'extérieur de la poutre (2 ; 2a), ces rebords (11) complétant la surface d'appui (14) par leur surface orientée à l'extérieur de la poutre.

3. Bassin suivant la revendication 2, caractérisé en ce que la surface d'appui (14) est espacée de chacune des ailes (22) du premier profilé.

4. Bassin suivant la revendication 3, caractérisé en ce que l'élément (17) disposé à l'intérieur dudit premier profilé, est un second profilé qui a, en section transversale, à peu près la forme d'un oméga dont les ailes (18) sont fixées au fond (19) du premier profilé par des rebords (23) et dont la surface de la partie intermédiaire, orientée en direction opposée audit fond, forme ladite surface d'appui (14).

5. Bassin suivant la revendication 4, caractérisé en ce que chaque poutre (2) comprend un canal de visite (20) à section transversale fermée et deux canaux de drainage (21) longitudinaux, à section transversale ouverte.

6. Bassin suivant la revendication 3, caractérisé en ce que l'élément (17) disposé à l'intérieur du premier profilé (16) est un second profilé (17a) qui a, en section transversale, à peu près la forme d'un L dont un flanc (24) est fixé perpendiculairement au fond (19) du premier profilé et dont la surface de l'autre flanc (25), orientée en direction opposée audit fond, forme ladite surface d'appui (14).

7. Bassin suivant la revendication 6, caractérisé en ce que chaque poutre comprend deux canaux longitudinaux, à section transversale ouverte, formant respectivement un canal de visite et de drainage (20a) et un canal de drainage (21a).

8. Bassin suivant la revendication 6, caractérisé en ce que le flanc (24) du second profilé (17a) fixé au premier, présente un rebord (23a) qui s'étend, dans une direction opposée à l'autre flanc (25), sur le fond (19) du premier profilé auquel il est fixé.

9. Bassin suivant la revendication 6, caractérisé en ce que chaque poutre est réalisée d'une seule pièce par étirage à froid.

**Claims**

1. A pool, more particularly a deactivation pool for a nuclear power plant, whose walls have a sealing-tight lining (1) of metal plates (6) welded to one another by their edges via welding fillets (15) and supported beneath each welding fillet by a beam (2 ; 2a) at a bearing surface thereof, each beam being attached to a corresponding wall of the pool and comprising a first sectional member (16) of substantially U-shaped cross-section and a flat bearing surface (14) extending longitudinally opposite at least a portion of the end (19) of the sectional member, characterized in that each beam comprises an element (17 ; 17a) disposed inside the first sectional member, such element bounding said bearing surface (14) and at least two longitudinal channels (20, 21 ; 20a, 21a) in the internal volume of the beam, one channel (21, 21a) being of open cross-section.

2. A pool according to claim 1, characterized in that the edge of the wings (22) of the first sectional member (16) each have a flange (11) extending parallel with the bearing surface (14) towards the outside of the beam (2 ; 2a), the flanges (11) completing the bearing surface (14) by their surface oriented to the outside of the beam.

3. A pool according to claim 2, characterized in that the bearing surface (14) is spaced from each of the wings (22) of the first sectional member.

4. A pool according to claim 3, characterized in that the element (17) disposed inside the first sectional member is a second sectional member which has in cross-section substantially the shape of a Greek letter omega whose wings (18) are attached to the end (19) of the first sectional member via flanges (23), that surface of the second sectional member which is oriented in the direction opposite from said end forming said bearing surface (14).

5. A pool according to claim 4, characterized in that each beam (2) comprises an inspection channel (20) of closed cross-section and two longitudinal drainage channels (21) of open cross-section.

6. A pool according to claim 3, characterized in that the element (17) disposed inside the first sectional element (16) is a second sectional element (17a) having in cross-section substantially the shape of an L, one flank (24) of which is attached perpendicularly to the end (19) of the first sectional member, the surface of the other flank (25), which is oriented in the direction opposite from said end, forming said bearing surface (14).

7. A pool according to claim 6, characterized in that each beam comprises two longitudinal channels of open cross-section, forming an inspection channel (20a) and a drainage channel (21a) respectively.

8. A pool according to claim 6, characterized in that the flank (24) of the second sectional member (17a) attached to the first sectional member has a flange (23a) which extends in a direction opposite from the other flank (25) over the end (19) of the first sectional member to which it is attached.

9. A pool according to claim 6, characterized in that each beam is made in a single piece by cold drawing.

**Patentansprüche**

1. Becken, insbesondere Deaktivierungsbassin für Kernkraftwerke, deren Seitenwände mit einem dichten Überzug (1) aus Blechen (6) versehen sind, die untereinander an ihren Rändern mittels Schweißnähten (15) verschweißt und unter jeder Schweißnaht durch einen Träger (2 ; 2a) auf der Höhe einer Auflagefläche des letzteren abgestützt sind, wobei jeder Träger in einer entsprechenden Seitenwand des Beckens befestigt ist und einen Profilstahl (16) aufweist, der einen Querschnitt von ungefährer Form eines U aufweist, wobei eine ebene Auflagefläche (14) sich längs wenigstens einem Bereich des Bodens (19) des Profilstahls gegenüberliegend erstreckt, dadurch gekennzeichnet, daß jeder Träger ein Element (17 ; 17a) aufweist, das im Inneren des ersten Profilstahls angeordnet ist, wobei dieses Element die Auflagefläche (14) und wenigstens zwei Längskanäle (20, 21 ; 20a, 21a) in dem inneren Volumen des Trägers begrenzt, von denen ein Kanal (21, 21a) offenen Querschnitt aufweist.

2. Becken nach Anspruch 1, dadurch gekennzeichnet, daß der Rand eines jeden der Flügel (22) des ersten Profilstahls (16) eine Leiste (11) aufweist, die sich parallel zur Auflagefläche (14) auf das äußere des Trägers (2 ; 2a) erstreckt, wobei die Leisten (11) die Auflagefläche (14) durch ihre Flächen vervollständigen, die nach dem Trägeräußeren gerichtet sind.

3. Becken nach Anspruch 2, dadurch gekennzeichnet, daß die Auflagefläche (14) einen Abstand von einem jeden Flügel (22) des ersten Profilstahls aufweist.

4. Becken nach Anspruch 3, dadurch gekennzeichnet, daß das im Inneren des ersten Profilstahls angeordnete Element (17) ein zweiter Profilstahl ist, der im Querschnitt ungefähr die Form eines Omegas aufweist, dessen Flügel oder Schenkel (18) am Boden (19) des ersten Profilstahls durch Leisten oder Ränder (23) befestigt sind, und dessen Fläche des Zwischenbereichs, der in gegenüberliegender Richtung zu dem Boden gerichtet ist, die Auflagefläche (14) bildet.

5. Becken nach Anspruch 4, dadurch gekennzeichnet, daß jeder Träger (2) einen Besichtigungskanal (20) von geschlossener Querschnittsform und zwei längliche Drainagekanäle (21) von offenem Querschnitt aufweist.

6. Becken nach Anspruch 3, dadurch gekennzeichnet, daß das im Inneren des ersten Profilstahls (16) angeordnete Element (17) ein zweiter Profilstahl (17a) ist, der im Querschnitt ungefähr die Form eines L aufweist, von dem eine Flanke (24) senkrecht zum Boden (19) des ersten Profilstahls befestigt und von dem die Fläche der anderen Flanke (25), die entgegen dem Boden gerichtet ist, die Auflagenfläche (14) bildet.

7. Becken nach Anspruch 6, dadurch gekennzeichnet, daß jeder Träger zwei Längskanäle von offenem Querschnitt aufweist, die einen Besichtigungskanal bzw. einen Drainagekanal (20a) bzw. einen Drainagekanal (21a) bilden.

8. Becken nach Anspruch 6, dadurch gekennzeichnet, daß die Flanke (24) des zweiten Profilstahls (17a), der am ersten befestigt ist, eine Leiste (23a) aufweist, die sich in einer zur anderen Flanke (25) entgegenlaufenden Richtung auf dem Boden (19) des ersten Profilstahls erstreckt, an dem sie befestigt ist.

9. Becken nach Anspruch 6, dadurch gekennzeichnet, daß jeder Träger aus einem einzigen Stück durch Kaltziehen erzeugt ist.

FIG.1

FIG.2

FIG.3

## FIG.4